# FASCICULE DE BREVET EUROPEEN

(11) **EP 3 083 289 B1**
(45) Date de publication et mention de la délivrance du brevet: **17.07.2019**
(21) Numéro de dépôt: 14812490.2
(22) Date de dépôt: 15.12.2014
(51) Int. Cl.: B60C 15/024, B60C 15/02, B60C 13/00

(54) **ENSEMBLE MONTÉ PNEUMATIQUE-JANTE POUR VÉHICULE À DEUX ROUES**
FELGENMONTIERTE ANORDNUNG FÜR EIN ZWEIRADFAHRZEUG
TYRE-RIM MOUNTED ASSEMBLY FOR A TWO-WHEELED VEHICLE

(30) Priorité: 16.12.2013 FR 1362643
(43) Date de publication de la demande: 26.10.2016
(73) Titulaire: Compagnie Générale des Etablissements Michelin, 63000 Clermont-Ferrand (FR)
(72) Inventeur: MEGEVAND, Rudy, F-63040 Clermont-Ferrand Cedex 9 (FR); SRIPITUCKSAKUL, Pongrit, F-63040 Clermont-Ferrand Cedex 9 (FR); LAURENT, Christophe, F-63040 Clermont-Ferrand Cedex 9 (FR)
(74) Mandataire: Millanvois, Patrick Jacques Jean
(86) Numéro de dépôt international: PCT/EP2014/077786
(87) Numéro de publication internationale: WO 2015/091370

(56) Documents cités:
- US-A- 4 034 792
- US-A1- 2010 230 025

## Description

L'invention a pour objet un pneumatique pour véhicule à deux roues et, plus précisément, un pneumatique pour vélo.

Bien que non limitée à cette application, l'invention sera décrite dans le cas d'un pneumatique pour vélo tout terrain, destiné à rouler sur tout type de sol, et, plus particulièrement, pour un pneumatique pour vélo tout terrain de type descente et enduro, destiné à rouler sur des terrains très accidentés et à des vitesses élevées.

Les évolutions technologiques relatives aux vélos tout terrain tendent actuellement vers des vélos de descente et d'enduro comprenant des suspensions à débattements de plus en plus importants mais aussi des composants de plus en plus légers. Les pneumatiques équipant un vélo de descente et d'enduro sont particulièrement sollicités, et sont soumis, en particulier, à des chocs pincements.

Un choc pincement se produit le plus souvent lors de la réception d'un saut, effectué par le cycliste, ou lors d'un impact violent avec un objet présent sur le sol, tel qu'une pierre ou une racine. Le pneumatique, en configuration « tubeless », ou l'ensemble pneumatique - chambre à air, en configuration « tube type », est alors violemment écrasé. En fonction de la charge exercée sur le pneumatique, résultant des masses respectives du vélo et du cycliste, de la vitesse du vélo et de la hauteur à laquelle monte le vélo au cours du saut, le pneumatique ou l'ensemble pneumatique - chambre à air, peut alors se rompre au niveau de son sommet, destiné à entrer en contact avec le sol par l'intermédiaire de la bande de roulement, et/ou de ses bourrelets, destinés à coopérer avec les rebords d'une jante sur laquelle le pneumatique est monté. Une rupture au niveau des bourrelets résulte de la perforation desdits bourrelets par les rebords de la jante. Ainsi, un choc pincement peut produire une double coupure respectivement au niveau du sommet et au niveau des bourrelets. Ce dommage étant le plus souvent non réparable, ceci implique la mise au rebut du pneumatique.

Il est connu d'améliorer la résistance aux chocs pincements à l'aide d'architectures de pneumatique adaptées.

Un pneumatique comprend usuellement une bande de roulement, destinée à entrer en contact avec le sol par l'intermédiaire d'une surface de roulement et reliée par deux flancs à deux bourrelets, destinés à coopérer avec la jante de montage du pneumatique. En outre, un pneumatique comprend une armature de renforcement, et, en particulier, une armature de carcasse reliant les deux bourrelets. Une armature de carcasse comprend au moins une couche de carcasse, constituée de renforts parallèles entre eux et enrobés dans un matériau à base d'élastomère, dit mélange élastomérique. Les renforts de la couche de carcasse, généralement en textile et souvent, mais non exclusivement, en nylon, forment, avec la direction circonférentielle du pneumatique, tangente à la surface de roulement, un angle pouvant être compris, par exemple, entre 45° et 90°. La couche de carcasse est généralement enroulée, dans chaque bourrelet, de l'intérieur vers l'extérieur du pneumatique, autour d'une tringle, pour former à partir de chaque bourrelet un retournement. Une tringle est un élément de renforcement circonférentiel, assurant à la fois l'ancrage de la couche de carcasse dans chaque bourrelet et le serrage dudit bourrelet sur la jante avec laquelle il est destiné à entrer en contact. Une tringle de pneumatique pour vélo peut être, à titre d'exemple, en aramide, ce qui lui confère souplesse et aptitude au pliage.

Selon une première conception connue, dans le cas d'une armature de carcasse comprenant une seule couche de carcasse, les extrémités libres de chaque retournement peuvent s'étendre jusqu'au sommet du pneumatique, au niveau duquel elles sont positionnées radialement à l'intérieur de la bande de roulement et radialement à l'extérieur de la couche de carcasse ; en outre elles sont radialement superposées entre elles, de manière à former un recouvrement partiel des deux retournements entre eux ou « overlap ». La direction radiale étant une direction perpendiculaire à l'axe de rotation du pneumatique, « radialement intérieur, respectivement extérieur » signifie « plus proche, respectivement plus éloigné, de l'axe de rotation du pneumatique, selon la direction radiale ». Dans une conception de type « overlap », une couche de renforcement additionnelle, reliant les deux bourrelets entre eux, peut être positionnée entre la couche de carcasse et ses retournements. A titre d'exemple, une telle couche additionnelle peut être constituée d'un tissu tramé en nylon. Cette armature additionnelle a pour effet d'améliorer la résistance de l'armature de carcasse aux perforations et aux coupures, ainsi qu'aux chocs pincements.

Selon une deuxième conception connue, chaque bourrelet comprend un élément de remplissage en mélange élastomérique, s'étendant radialement à l'extérieur de la tringle et axialement entre la couche de carcasse et son retournement. La direction axiale étant la direction de l'axe de rotation du pneumatique, « axialement intérieur, respectivement extérieur » signifie « plus proche, respectivement plus éloigné, du plan équatorial du pneumatique, selon la direction axiale », le plan équatorial du pneumatique passant par le milieu de la bande de roulement et étant perpendiculaire à l'axe de rotation du pneumatique. Un tel élément de remplissage rigidifie le bourrelet. Par sa capacité de déformation et par le découplage qu'il induit entre la couche de carcasse et son retournement, il permet en outre de mieux absorber l'énergie de déformation générée par un choc pincement. Par conséquent, c'est une solution qui améliore également la résistance aux chocs pincements.

Selon une troisième conception connue, l'armature de carcasse d'un pneumatique pour vélo est constituée d'au moins deux couches de carcasse s'enroulant dans chaque bourrelet, de l'intérieur vers l'extérieur, autour d'une tringle, pour former un retournement. Préférentiellement, les renforts d'une couche de carcasse, sont croisés d'une couche de carcasse à la suivante en formant, avec la direction circonférentielle du pneumatique, un angle égal à 45°. Les extrémités libres des retournements respectifs de chaque couche de carcasse sont radialement superposées, radialement à l'intérieur de la bande roulement, au niveau du sommet, pour former un recouvrement ou « overlap ». En outre, chaque bourrelet comprend un élément de remplissage en mélange élastomérique, s'étendant radialement à l'extérieur de la tringle et axialement entre la couche de carcasse la plus axialement extérieure et le retournement correspondant le plus axialement intérieur. La combinaison d'une armature de carcasse comprenant au moins deux couches de carcasse et d'un élément de remplissage dans chaque bourrelet permet avantageusement de résister aux chocs pincements.

Enfin, selon une quatrième conception connue, telle que décrite par le document US 20100230025 A1, chaque bourrelet comprend un matériau additionnel, positionné dans une portion radialement intérieure du flanc, à proximité du rebord de jante et formant une protubérance axialement extérieure au flanc, ayant une section méridienne sensiblement triangulaire. Ce matériau additionnel entre en compression en usage, lors de l'écrasement du pneumatique, et permet d'améliorer la résistance aux chocs pincements.

Les inventeurs se sont donnés pour objectif d'améliorer la résistance aux chocs pincements d'un pneumatique pour vélo tout terrain, tout en minimisant l'augmentation éventuelle de la masse du pneumatique.

Cet objectif a été atteint par un ensemble monté pour véhicule à deux roues, comprenant :
- un pneumatique ayant une hauteur de section radiale H et comprenant une bande de roulement reliée par deux flancs à deux bourrelets, monté sur une jante,
- la jante comprenant deux rebords de jante ayant respectivement une hauteur radiale G et comprenant respectivement une portion d'extrémité radiale circulaire de rayon R₁,
- chaque bourrelet ayant un point radialement intérieur I et étant destiné à entrer en contact avec un rebord de jante,
- chaque bourrelet comprenant un bloc porteur, positionné sur la face axialement extérieure de chaque flanc, s'étendant radialement depuis un premier point A du flanc jusqu'à un deuxième point B du flanc, radialement extérieur au premier point A, le bloc porteur s'étendant axialement depuis le flanc jusqu'à un troisième point C axialement extérieur au flanc,
- la hauteur radiale h_{A} entre le premier point A du flanc et le point radialement intérieur I du bourrelet étant au plus égale à 1.5 fois la hauteur radiale G du rebord de jante,
- la hauteur radiale h_{B} entre le deuxième point B du flanc et le point radialement intérieur I du bourrelet étant au moins égale à 0.1 fois la hauteur de section radiale H du pneumatique
- et la distance d_{C} entre le premier point A du flanc et le troisième point C axialement extérieur au flanc étant au moins égale à 0.5 fois le rayon R₁ de la portion d'extrémité radiale circulaire du rebord de jante.

Chaque flanc du pneumatique est pourvu d'un bloc porteur, s'étendant radialement depuis un premier point A du flanc jusqu'à un deuxième point B du flanc, radialement extérieur au premier point A, et axialement depuis le flanc jusqu'à un troisième point C axialement extérieur au flanc. En d'autres termes le bloc porteur forme une protubérance de section méridienne sensiblement triangulaire à partir de la face axialement extérieure du flanc. Par section méridienne, on entend une coupe du bloc porteur selon un plan méridien contenant l'axe de rotation du pneumatique.

Le principe de fonctionnement d'un bloc porteur, positionné sur la face axialement extérieure de chaque flanc, est, lors d'un choc pincement, de décaler axialement vers l'extérieur le point d'impact entre le sommet et le bourrelet du pneumatique, et donc de l'éloigner de la zone critique du rebord de jante susceptible d'agir comme un objet tranchant. Ainsi, l'énergie de déformation générée par le choc pincement est répartie de façon plus homogène entre la partie radialement intérieure du flanc et le bourrelet, et le rebord de jante n'agit plus comme un objet tranchant vis-à-vis du pneumatique. La résistance du pneumatique, vis-à-vis d'un choc pincement, est ainsi améliorée.

Selon l'invention, une hauteur radiale h_{A} entre le premier point A du flanc et le point radialement intérieur I du bourrelet au plus égale à 1.5 fois la hauteur radiale G du rebord de jante implique que le bloc porteur est positionné radialement sur le flanc, à proximité du bourrelet, de telle sorte que lorsque le pneumatique est monté sur sa jante, le bloc porteur est radialement positionné à proximité du rebord de jante. Cette hauteur radiale maximale par rapport au rebord de jante garantit que le bloc porteur va pouvoir entrer en contact avec le rebord de jante lors de l'écrasement radial du pneumatique au cours d'un choc pincement.

Egalement selon l'invention, une hauteur radiale h_{B} entre le deuxième point B du flanc et le point radialement intérieur I du bourrelet au moins égale à 0.1 fois la hauteur de section radiale H du pneumatique implique que le bloc porteur doit avoir une hauteur radiale, mesurée entre le premier point A et le deuxième point B, minimale. La hauteur radiale h_{B} est donnée en fonction de la hauteur de section H du pneumatique, hauteur théorique telle que définie par la norme de la European Technical Rim and Tyre Organisation ou ETRTO.

Encore selon l'invention, une distance d_{C} entre le premier point A du flanc et le troisième point C axialement extérieur au flanc au moins égale à 0.5 fois le rayon R₁ de la portion d'extrémité radiale circulaire du rebord de jante garantit une épaisseur axiale minimale du bloc porteur. La distance d_{C} est donnée en fonction du rayon R₁ de la portion d'extrémité radiale circulaire du rebord de jante, prise comme grandeur caractéristique de référence et définie par la norme ETRTO. Une distance d_{C} minimale garantit un enroulement minimal du bloc porteur sur le rebord de jante lors d'un choc pincement.

Avantageusement la hauteur radiale h_{A} entre le premier point A du flanc et le point radialement intérieur I du bourrelet est au moins égale à 0.8 fois la hauteur radiale G du rebord de jante, et de préférence au moins égale à 1.1 fois la hauteur radiale G du rebord de jante. Une hauteur radiale h_{A} minimale garantit la montabilité du bourrelet sur la jante. En effet, une hauteur radiale h_{A} trop faible entrainerait la présence du bloc porteur au niveau du rebord de jante, ce qui impliquerait une application insuffisante du bourrelet contre le rebord de jante et donc un risque de fuite du gaz de gonflage et de perte de pression, dans le cas d'un pneumatique « tubeless ». Si le bloc porteur est conçu pour ne pas générer de problème d'étanchéité, il n'a pas pour autant vocation à s'adapter parfaitement à la portion d'extrémité radiale circulaire du rebord de jante, en fonctionnement nominal du pneumatique en dehors d'un choc pincement. Le bloc porteur n'est pas un élément d'étanchéité en lui-même, l'étanchéité du pneumatique étant assurée par la conception du bourrelet et de la tringle qui est optimisée vis-à-vis du serrage du bourrelet sur le rebord de jante.

Encore avantageusement la hauteur radiale h_{B} entre le deuxième point B du flanc et le point radialement intérieur I du bourrelet est au plus égale à 0.5 fois la hauteur de section radiale H du pneumatique, et de préférence au plus égale à 0.3 fois la hauteur de section radiale H du pneumatique. Cette hauteur radiale maximale limite la présence du bloc porteur à la partie radialement intérieure du flanc, reliée au bourrelet. Une hauteur radiale maximale plus importante aurait le double inconvénient de trop rigidifier le flanc vis-à-vis de la flexion et d'augmenter inutilement la masse du pneumatique.

Egalement avantageusement la distance d_{C} entre le premier point A du flanc et le troisième point C axialement extérieur au flanc est au plus égale à 5 fois le rayon R₁ de la portion d'extrémité radiale circulaire du rebord de jante, et de préférence au plus égale à 3 fois le rayon R₁ de la portion d'extrémité radiale circulaire du rebord de jante. Cette distance maximale limite l'épaisseur axiale du bourrelet au juste nécessaire : elle permet l'enroulement du bloc porteur sur la portion d'extrémité radiale circulaire du rebord de jante sans trop augmenter la masse du pneumatique.

Il est également avantageux que la droite D passant par le premier point A du flanc et par le troisième point C axialement extérieur au flanc forme, avec la direction axiale du pneumatique un angle T, au plus égal à 60° en valeur absolue, et de préférence au moins égal à 30° en valeur absolue. Cet intervalle angulaire signifie que l'angle T est au plus égal à + ou -60°, ce qui implique que le troisième point C peut être radialement extérieur ou radialement intérieur au premier point A, lorsque le pneumatique est monté sur sa jante et gonflé à la pression prescrite. Cet intervalle permet d'optimiser le contact entre le bloc porteur et la portion d'extrémité radiale circulaire du rebord de jante, lors d'un choc pincement, tout en limitant l'augmentation de masse du pneumatique résultant de la présence du ploc porteur.

Selon un premier mode de réalisation, le bloc porteur ayant deux faces reliant respectivement le premier point A du flanc et le troisième point C axialement extérieur au flanc, et le deuxième point B du flanc et le troisième point C axialement extérieur au flanc, les faces du bloc porteur comprennent des portions curvilignes, ce qui a priori facilite le montage du pneumatique sur sa jante

Selon un deuxième mode de réalisation, le bloc porteur ayant deux faces reliant respectivement le premier point A du flanc et le troisième point C axialement extérieur au flanc, et le deuxième point B du flanc et le troisième point C axialement extérieur au flanc, les faces du bloc porteur comprennent des portions rectilignes ; ce qui facilite la mise en oeuvre industrielle par moulage du bloc porteur.

Selon une variante préférée des premier et deuxième modes de réalisation, le bloc porteur ayant une face reliant le premier point A du flanc et le troisième point C axialement extérieur au flanc, la face du bloc porteur, reliant le premier point A du flanc et le troisième point C axialement extérieur au flanc, comprend une portion circulaire s'étendant axialement vers l'extérieur depuis le premier point A du flanc, la portion circulaire ayant un rayon r_{A} au moins égal à 0.5 fois le rayon R₁ de la portion d'extrémité radiale circulaire du rebord de jante. Une telle portion circulaire de la face radialement intérieure du bloc porteur entre en contact de façon optimale avec la portion d'extrémité radiale circulaire du rebord de jante, lors d'un choc pincement.

Le bloc porteur comprend préférentiellement un mélange élastomérique plutôt mou et déformable, favorable à un étalement du pic de pression dans la portion de bourrelet soumise au choc pincement.

Préférentiellement un bloc porteur est réparti circonférentiellement de façon continue, compte tenu du caractère aléatoire de l'occurrence du choc pincement sur la circonférence du pneumatique.

Les caractéristiques et autres avantages de l'invention seront mieux compris à l'aide des figures schématiques et non représentées à l'échelle, en annexe:
- figure 1: coupe méridienne d'un ensemble monté comprenant un pneumatique pour vélo tout terrain avec blocs porteurs selon l'invention,
- figure 2: coupe méridienne d'un bourrelet de pneumatique selon l'invention,
- figure 3: coupe méridienne d'un ensemble monté comprenant un pneumatique pour vélo tout terrain avec blocs porteurs selon l'invention, soumis à un choc pincement.

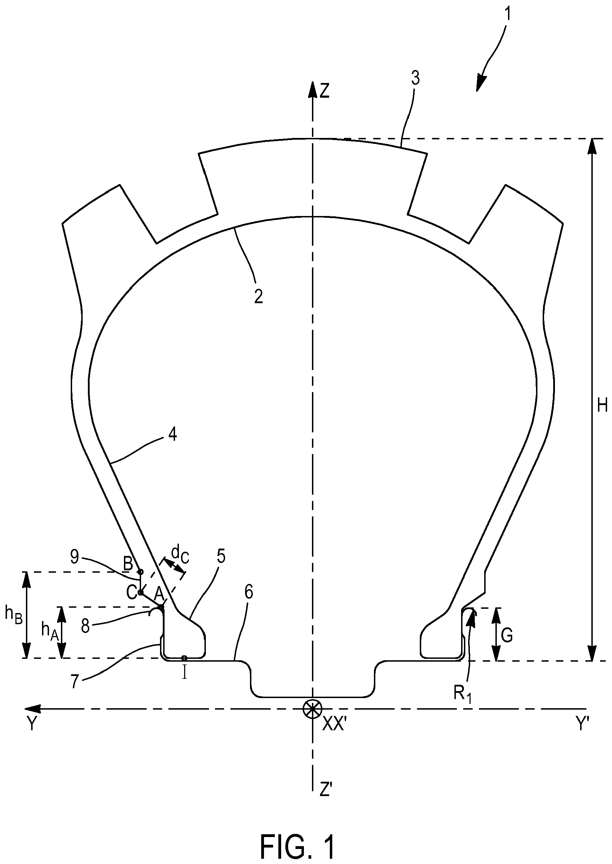

La figure 1 présente une coupe méridienne d'un pneumatique pour vélo tout terrain 1, dans un plan méridien (YZ), où (YY') et (ZZ') sont respectivement la direction de l'axe de rotation du pneumatique et la direction perpendiculaire à l'axe de rotation du pneumatique. La direction (XX') est la direction circonférentielle du pneumatique, perpendiculaire au plan méridien (YZ). Le pneumatique 2 a une hauteur de section radiale H, H étant la hauteur de section théorique définie par la norme ETRTO, et comprend une bande de roulement 3 reliée par deux flancs 4 à deux bourrelets 5. La jante 6 comprend deux rebords de jante 7 ayant respectivement une hauteur radiale G et comprenant respectivement une portion d'extrémité radiale circulaire 8 de rayon R₁, les caractéristiques géométriques G et R1 étant définies par la norme ETRTO. Chaque bourrelet 5, destiné à entrer en contact avec un rebord de jante 7, a un point radialement intérieur I. Conformément à l'invention, un bloc porteur 9, positionné sur la face axialement extérieure de chaque flanc 4, s'étend radialement depuis un premier point A du flanc 4 jusqu'à un deuxième point B du flanc 4, radialement extérieur au premier point A, et le bloc porteur 9 s'étend axialement depuis le flanc 4 jusqu'à un troisième point C axialement extérieur au flanc 4. La hauteur radiale h_{A} entre le premier point A du flanc 4 et le point radialement intérieur I du bourrelet 5 est au plus égale à 1.5 fois la hauteur radiale G du rebord de jante 7. La hauteur radiale h_{B} entre le deuxième point B du flanc 4 et le point radialement intérieur I du bourrelet 5 est au moins égale à 0.1 fois la hauteur de section radiale H du pneumatique 2. La distance d_{C} entre le premier point A du flanc 4 et le troisième point C axialement extérieur au flanc 4 est au moins égale à 0.5 fois le rayon R₁ de la portion d'extrémité radiale circulaire 8 du rebord de jante 7.

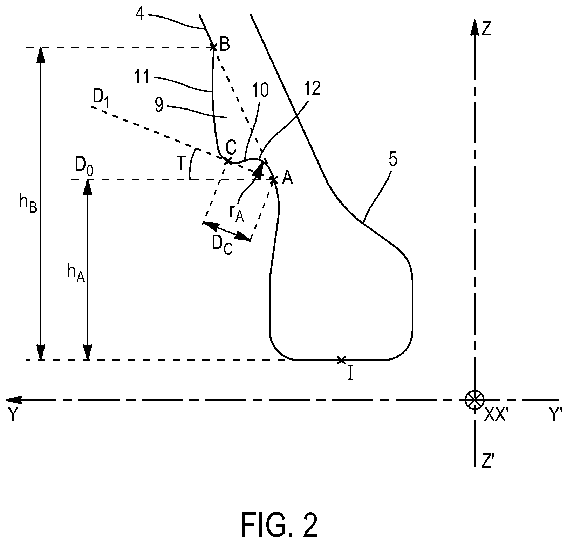

La figure 2 présente une coupe méridienne d'un bourrelet 5 de pneumatique selon l'invention, dans un plan méridien (YZ). Le bloc porteur 9 est radialement positionné dans la partie radialement intérieure du flanc 4, radialement à l'extérieur du bourrelet 5. Le bloc porteur 9 est délimité radialement vers l'intérieur par un premier point A du flanc 4, positionné à une hauteur radiale h_{A} radialement à l'extérieur du point I radialement intérieur du bourrelet 5, et radialement vers l'extérieur par un deuxième point B du flanc 4, positionné à une hauteur radiale h_{B} radialement à l'extérieur du point I. De plus le bloc porteur 9 est délimité axialement vers l'intérieur par la face axialement extérieure du flanc 4 et axialement vers l'extérieur par un troisième point C, positionné à une distance d_{C} axialement à l'extérieur du premier point A. C est le point d'intersection des droites tangentes respectivement à la face (10) du bloc porteur 9, issue du premier point A, et à la face (11) du bloc porteur 9, issue du deuxième point B. En outre la droite D₁, passant par les premier et troisième points A et C, forme un angle T avec la droite D₀ passant par le premier point A et de direction axiale (YY'). Cet angle T peut être orienté de part et d'autre de la droite D₀ dans un intervalle maximal [-60°, +60°], et préférentiellement dans un intervalle [-30°, +30°]. En d'autres termes, le point C peut être radialement intérieur ou radialement extérieur à la droite D₀. Le bloc porteur 9 constitue ainsi une protubérance de section méridienne sensiblement triangulaire. Dans le mode de réalisation représenté sur la figure 2, le bloc porteur 9 comprend une face rectiligne 11 et une face 10, comprenant une portion circulaire 12 de rayon r_{A}. Les inventeurs ont montré que le rayon r_{A} est avantageusement au moins égal à 0.5 fois le rayon R₁ de la portion d'extrémité radiale circulaire 8 du rebord de jante 7.

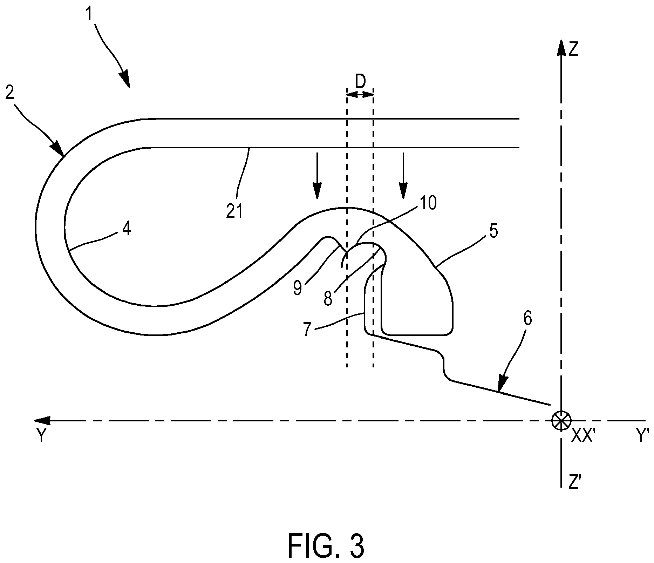

La figure 3 présente une coupe méridienne d'un ensemble monté 1 comprenant un pneumatique 2 pour vélo tout terrain avec blocs porteurs selon l'invention, soumis à un choc pincement. Au cours du choc pincement, le flanc 4 va fortement fléchir et le sommet 21 du pneumatique va venir en contact avec le bourrelet 5, selon le sens des flèches de la figure 3. Le bourrelet 5 va, quant à lui, fortement fléchir sur le rebord de jante 7 de la jante 6. Plus précisément la face 10 du bloc porteur 9 va s'enrouler sur la portion d'extrémité circulaire 8 du rebord de jante 7.Par rapport à un pneumatique usuel sans bloc porteur, le point d'impact, correspondant au pic de pression au cours du choc pincement, va être décalé d'une distance axiale D axialement vers l'extérieur et donc éloigné de la zone critique du rebord de jante susceptible d'agir comme un objet tranchant. Ainsi, l'énergie de déformation générée par le choc pincement est répartie de façon plus homogène entre la partie radialement intérieure du flanc et le bourrelet, et le rebord de jante n'agit plus comme un objet tranchant vis-à-vis du pneumatique. La résistance du pneumatique, vis-à-vis d'un choc pincement, est ainsi améliorée.

L'invention a été plus particulièrement étudiée pour un pneumatique de vélo de dimension 26^{∗}2.50 destiné à équiper un vélo tout terrain, dans lequel chaque flanc est pourvu d'un bloc porteur selon l'invention. Une résistance optimale aux chocs pincements a été obtenue avec les caractéristiques suivantes :
- hauteur radiale h_{A} = 6.6 mm égale à 1.1 fois la hauteur radiale G du rebord de jante
- hauteur radiale h_{B} = 11.1 mm égale à 0.2 fois la hauteur de section radiale H du pneumatique
- distance d_{C} = 2 mm égale à 2 fois le rayon R₁ de la portion d'extrémité radiale circulaire du rebord de jante
- angle T égal à 30°
- rayon r_{A} égal au rayon R₁ de la portion d'extrémité radiale circulaire du rebord de jante.

L'invention peut également s'étendre à un bloc porteur constitué d'un matériau composite tel que, par exemple, un bloc en mélange élastomérique recouvert d'un tissu comprenant des renforts textiles enrobés dans un mélange élastomérique.

L'invention peut également s'appliquer, par exemple, à des véhicules à deux roues motorisés, à des fauteuils roulants ou à des poussettes.

## Revendications

1. Ensemble monté (1) pour véhicule à deux roues, comprenant :
- un pneumatique (2) ayant une hauteur de section radiale H et comprenant une bande de roulement (3) reliée par deux flancs (4) à deux bourrelets (5), monté sur une jante (6),
- la jante (6) comprenant deux rebords de jante (7) ayant respectivement une hauteur radiale G et comprenant respectivement une portion d'extrémité radiale circulaire (8) de rayon R₁,
- chaque bourrelet (5) ayant un point radialement intérieur I et étant destiné à entrer en contact avec un rebord de jante (7),
- chaque bourrelet (5) comprenant un bloc porteur (9), positionné sur la face axialement extérieure de chaque flanc (4), s'étendant radialement depuis un premier point A du flanc (4) jusqu'à un deuxième point B du flanc (4), radialement extérieur au premier point A, le bloc porteur (9) s'étendant axialement depuis le flanc (4) jusqu'à un troisième point C axialement extérieur au flanc (4),
**caractérisé en ce que** la hauteur radiale h_{A} entre le premier point A du flanc (4) et le point radialement intérieur I du bourrelet (5) est au plus égale à 1.5 fois la hauteur radiale G du rebord de jante (7), **en ce que** la hauteur radiale h_{B} entre le deuxième point B du flanc (4) et le point radialement intérieur I du bourrelet (5) est au moins égale à 0.1 fois la hauteur de section radiale H du pneumatique (2) **et en ce que** la distance d_{C} entre le premier point A du flanc (4) et le troisième point C axialement extérieur au flanc (4) est au moins égale à 0.5 fois le rayon R₁ de la portion d'extrémité radiale circulaire (8) du rebord de jante (7).

2. Ensemble monté (1) pour véhicule à deux roues selon la revendication 1, **dans lequel** la hauteur radiale h_{A} entre le premier point A du flanc (4) et le point radialement intérieur I du bourrelet (5) est au moins égale à 0.8 fois la hauteur radiale G du rebord de jante (7), et de préférence au moins égale à 1.1 fois la hauteur radiale G du rebord de jante (7).

3. Ensemble monté (1) pour véhicule à deux roues selon l'une des revendications 1 ou 2, **dans lequel** la hauteur radiale h_{B} entre le deuxième point B du flanc (4) et le point radialement intérieur I du bourrelet (5) est au plus égale à 0.5 fois la hauteur de section radiale H du pneumatique (2), et de préférence au plus égale à 0.3 fois la hauteur de section radiale H du pneumatique (2).

4. Ensemble monté (1) pour véhicule à deux roues selon l'une quelconque des revendications 1 à 3, **dans lequel** la distance d_{C} entre le premier point A du flanc (4) et le troisième point C axialement extérieur au flanc (4) est au plus égale à 5 fois le rayon R₁ de la portion d'extrémité radiale circulaire (8) du rebord de jante (7), et de préférence au plus égale à 3 fois le rayon R₁ de la portion d'extrémité radiale circulaire (8) du rebord de jante (7).

5. Ensemble monté (1) pour véhicule à deux roues selon l'une quelconque des revendications 1 à 4, **dans lequel** la droite D passant par le premier point A du flanc (4) et par le troisième point C axialement extérieur au flanc (4) forme avec la direction axiale du pneumatique (YY') un angle T au plus égal à 60° en valeur absolue, et de préférence au moins égal à 30° en valeur absolue.

6. Ensemble monté (1) pour véhicule à deux roues selon l'une quelconque des revendications 1 à 5, le bloc porteur (9) ayant deux faces (10, 11) reliant respectivement le premier point A du flanc (4) et le troisième point C axialement extérieur au flanc (4), et le deuxième point B du flanc (4) et le troisième point C axialement extérieur au flanc (4), **dans lequel** les faces (10, 11) du bloc porteur (9) comprennent des portions curvilignes.

7. Ensemble monté (1) pour véhicule à deux roues selon l'une quelconque des revendications 1 à 6, le bloc porteur (9) ayant deux faces (10, 11) reliant respectivement le premier point A du flanc (4) et le troisième point C axialement extérieur au flanc (4), et le deuxième point B du flanc (4) et le troisième point C axialement extérieur au flanc (4), **dans lequel** les faces (10, 11) du bloc porteur (9) comprennent des portions rectilignes.

8. Ensemble monté (1) pour véhicule à deux roues selon l'une quelconque des revendications 1 à 7, le bloc porteur (9) ayant une face (10) reliant le premier point A du flanc (4) et le troisième point C axialement extérieur au flanc (4), **dans lequel** la face (10) du bloc porteur (9), reliant le premier point A du flanc (4) et le troisième point C axialement extérieur au flanc (4), comprend une portion circulaire (12) s'étendant axialement vers l'extérieur depuis le premier point A du flanc (4), la portion circulaire (12) ayant un rayon r_{A} au moins égal à 0.5 fois le rayon R₁ de la portion d'extrémité radiale circulaire (8) du rebord de jante (7).

## Patentansprüche

1. Montierte Anordnung (1) für ein Zweiradfahrzeug, welche umfasst:
- einen Reifen (2), der eine radiale Querschnittshöhe H aufweist und einen Laufstreifen (3), der durch zwei Seitenwände (4) mit zwei Wülsten (5) verbunden ist, umfasst und auf einer Felge (6) montiert ist,
- die Felge (6), die zwei Felgenhörner (7) umfasst, die jeweils eine radiale Höhe G aufweisen und jeweils einen kreisförmigen radialen Endabschnitt (8) mit dem Radius R₁ umfassen,
- wobei jeder Wulst (5) einen radial inneren Punkt I aufweist und dazu bestimmt ist, mit einem Felgenhorn (7) in Kontakt zu kommen,
- wobei jeder Wulst (5) einen Trägerblock (9) umfasst, der auf der axial äußeren Seite der jeweiligen Seitenwand (4) positioniert ist, wobei er sich von einem ersten Punkt A der Seitenwand (4) bis zu einem zweiten Punkt B der Seitenwand (4) erstreckt, der radial außerhalb des ersten Punktes A liegt, wobei sich der Trägerblock (9) axial von der Seitenwand (4) bis zu einem dritten Punkt C erstreckt, der axial außerhalb der Seitenwand (4) liegt,
**dadurch gekennzeichnet, dass** die radiale Höhe h_{A} zwischen dem ersten Punkt A der Seitenwand (4) und dem radial inneren Punkt I des Wulstes (5) höchstens gleich dem 1,5-Fachen der radialen Höhe G des Felgenhorns (7) ist, dadurch, dass die radiale Höhe h_{B} zwischen dem zweiten Punkt B der Seitenwand (4) und dem radial inneren Punkt I des Wulstes (5) mindestens gleich dem 0,1-Fachen der radialen Querschnittshöhe H des Reifens (2) ist, und dadurch, dass der Abstand d_{C} zwischen dem ersten Punkt A der Seitenwand (4) und dem dritten Punkt C, der axial außerhalb der Seitenwand (4) liegt, mindestens gleich dem 0,5-Fachen des Radius R₁ des kreisförmigen radialen Endabschnitts (8) des Felgenhorns (7) ist.

2. Montierte Anordnung (1) für ein Zweiradfahrzeug nach Anspruch 1, wobei die radiale Höhe h_{A} zwischen dem ersten Punkt A der Seitenwand (4) und dem radial inneren Punkt I des Wulstes (5) mindestens gleich dem 0,8-Fachen der radialen Höhe G des Felgenhorns (7) und vorzugsweise mindestens gleich dem 1,1-Fachen der radialen Höhe G des Felgenhorns (7) ist.

3. Montierte Anordnung (1) für ein Zweiradfahrzeug nach einem der Ansprüche 1 oder 2, wobei die radiale Höhe h_{B} zwischen dem zweiten Punkt B der Seitenwand (4) und dem radial inneren Punkt I des Wulstes (5) höchstens gleich dem 0,5-Fachen der radialen Querschnittshöhe H des Reifens (2) und vorzugsweise höchstens gleich dem 0,3-Fachen der radialen Querschnittshöhe H des Reifens (2) ist.

4. Montierte Anordnung (1) für ein Zweiradfahrzeug nach einem der Ansprüche 1 bis 3, wobei der Abstand d_{C} zwischen dem ersten Punkt A der Seitenwand (4) und dem dritten Punkt C, der axial außerhalb der Seitenwand (4) liegt, höchstens gleich dem 5-Fachen des Radius R₁ des kreisförmigen radialen Endabschnitts (8) des Felgenhorns (7) und vorzugsweise höchstens gleich dem 3-Fachen des Radius R₁ des kreisförmigen radialen Endabschnitts (8) des Felgenhorns (7) ist.

5. Montierte Anordnung (1) für ein Zweiradfahrzeug nach einem der Ansprüche 1 bis 4, wobei die Gerade D, die durch den ersten Punkt A der Seitenwand (4) und durch den dritten Punkt C, der axial außerhalb der Seitenwand (4) liegt, verläuft, mit der axialen Richtung des Reifens (YY') einen Winkel T bildet, der dem absoluten Betrag nach höchstens gleich 60° und vorzugsweise dem absoluten Betrag nach mindestens gleich 30° ist.

6. Montierte Anordnung (1) für ein Zweiradfahrzeug nach einem der Ansprüche 1 bis 5, wobei der Trägerblock (9) zwei Seitenflächen (10, 11) aufweist, die den ersten Punkt A der Seitenwand (4) und den dritten Punkt C, der axial außerhalb der Seitenwand (4) liegt, bzw. den zweiten Punkt B der Seitenwand (4) und den dritten Punkt C, der axial außerhalb der Seitenwand (4) liegt, verbinden, wobei die Seitenflächen (10, 11) des Trägerblocks (9) gekrümmte Abschnitte umfassen.

7. Montierte Anordnung (1) für ein Zweiradfahrzeug nach einem der Ansprüche 1 bis 6, wobei der Trägerblock (9) zwei Seitenflächen (10, 11) aufweist, die den ersten Punkt A der Seitenwand (4) und den dritten Punkt C, der axial außerhalb der Seitenwand (4) liegt, bzw. den zweiten Punkt B der Seitenwand (4) und den dritten Punkt C, der axial außerhalb der Seitenwand (4) liegt, verbinden, wobei die Seitenflächen (10, 11) des Trägerblocks (9) gerade Abschnitte umfassen.

8. Montierte Anordnung (1) für ein Zweiradfahrzeug nach einem der Ansprüche 1 bis 7, wobei der Trägerblock (9) eine Seitenfläche (10) aufweist, die den ersten Punkt A der Seitenwand (4) und den dritten Punkt C, der axial außerhalb der Seitenwand (4) liegt, verbindet, wobei die Seitenfläche (10) des Trägerblocks (9), die den ersten Punkt A der Seitenwand (4) und den dritten Punkt C, der axial außerhalb der Seitenwand (4) liegt, verbindet, einen kreisförmigen Abschnitt (12) umfasst, der sich vom ersten Punkt A der Seitenwand (4) aus axial nach außen erstreckt, wobei der kreisförmige Abschnitt (12) einen Radius r_{A} aufweist, der mindestens gleich dem 0,5-Fachen des Radius R₁ des kreisförmigen radialen Endabschnitts (8) des Felgenhorns (7) ist.

## Claims

1. Mounted assembly (1) for a two-wheeled vehicle, comprising:
- a tyre (2) having a radial section height H and comprising a tread (3) connected by two sidewalls (4) to two beads (5) and mounted on a rim (6),
- the rim (6) comprising two rim flanges (7) respectively having a radial height G and respectively comprising a circular radial end portion (8) of radius R₁,
- each bead (5) having a radial interior point I and being intended to come in contact with a rim flange (7),
- each bead (5) comprising a bearing block (9), positioned on the axially exterior face of each sidewall (4), extending radially from a first point A of the sidewall (4) as far as a second point B of the sidewall (4), radially on the outside of the first point A, the bearing block (9) extending axially from the sidewall (4) as far as a third point C axially on the outside of the sidewall (4),
**characterized in that** the radial height h_{A} between the first point A of the sidewall (4) and the radially interior point I of the bead (5) is at most equal to 1.5 times the radial height G of the rim flange (7), **in that** the radial height h_{B} between the second point B of the sidewall (4) and the radially interior point I of the bead (5) is at least equal to 0.1 times the radial section height H of the tyre (2) **and in that** the distance d_{C} between the first point A of the sidewall (4) and the third point C axially on the outside of the sidewall (4) is at least equal to 0.5 times the radius R₁ of the circular radial end portion (8) of the rim flange (7).

2. Mounted assembly (1) for a two-wheeled vehicle according to Claim 1, **in which** the radial height h_{A} between the first point A of the sidewall (4) and the radially interior point I of the bead (5) is at least equal to 0.8 times the radial height G of the rim flange (7), and preferably at least equal to 1.1 times the radial height G of the rim flange (7).

3. Mounted assembly (1) for a two-wheeled vehicle according to either of Claims 1 and 2, **in which** the radial height h_{B} between the second point B of the sidewall (4) and the radially interior point I of the bead (5) is at most equal to 0.5 times the radial section height H of the tyre (2), and preferably at most equal to 0.3 times the radial section height H of the tyre (2).

4. Mounted assembly (1) for a two-wheeled vehicle according to any one of Claims 1 to 3, **in which** the distance d_{C} between the first point A of the sidewall (4) and the third point C axially on the outside of the sidewall (4) is at most equal to 5 times the radius R₁ of the circular radial end portion (8) of the rim flange (7) and preferably at most equal to 3 times the radius R₁ of the circular radial end portion (8) of the rim flange (7).

5. Mounted assembly (1) for a two-wheeled vehicle according to any one of Claims 1 to 4, **in which** the straight line D passing through the first point A of the sidewall (4) and through the third point C axially on the outside of the sidewall (4) forms with the axial direction (YY') of the tyre an angle T at most equal to 60° in terms of absolute value and preferably at least equal to 30° in terms of absolute value.

6. Mounted assembly (1) for a two-wheeled vehicle according to any one of Claims 1 to 5, the bearing block (9) having two faces (10, 11) respectively connecting the first point A of the sidewall (4) and the third point C axially on the outside of the sidewall (4), and the second point B of the sidewall (4) and the third point C axially on the outside of the sidewall (4), **in which** the faces (10, 11) of the bearing block (9) comprise curved portions.

7. Mounted assembly (1) for a two-wheeled vehicle according to any one of Claims 1 to 6, the bearing block (9) having two faces (10, 11) respectively connecting the first point A of the sidewall (4) and the third point C axially on the outside of the sidewall (4), and the second point B of the sidewall (4) and the third point C axially on the outside of the sidewall (4), **in which** the faces (10, 11) of the bearing block (9) comprise straight portions.

8. Mounted assembly (1) for a two-wheeled vehicle according to any one of Claims 1 to 7, the bearing block (9) having a face (10) connecting the first point A of the sidewall (4) and the third point C axially on the outside of the sidewall (4), **in which** the face (10) of the bearing block (9), connecting the first point A of the sidewall (4) and the third point C axially on the outside of the sidewall (4), comprises a circular portion (12) extending axially outwards from the first point A of the sidewall (4), the circular portion (12) having a radius r_{A} at least equal to 0.5 times the radius R₁ of the circular radial end portion (8) of the flange rim (7).
